# EUROPEAN PATENT SPECIFICATION

(11) **EP 1 583 304 B1**
(45) Date of publication and mention of the grant of the patent: **06.12.2006**
(21) Application number: 04290841.8
(22) Date of filing: 31.03.2004
(51) Int. Cl.: H04L 12/66

(54) **Media gateway**
Media gateway
Passerelle de media

(43) Date of publication of application: 05.10.2005
(73) Proprietor: ALCATEL, 75008 Paris (FR)
(72) Inventor: Waitzmann, Carsten, 70806 Kornwestheim (DE)
(74) Representative: Rausch, Gabriele

(56) References cited:
- EP-A- 0 621 713
- US-A- 5 774 640
- US-A1- 2002 095 493
- US-A1- 2002 154 646

## Description

The invention relates to a method of providing a reconfiguration of a packet switching fabric plane and/or source boards of a media gateway, as well as a media gateway for a NGN (NGN = Next Generation Network).

Today PSTN telecommunication systems (PSTN = Public Switched Telecommunication Network) provide telecommunication services by means of circuit switched connections established through the telecommunication network. In contrast to this approach, next generation networks (NGN) make use of packet technologies for voice and data transportation. Next generation networks will consist of elements like soft switches, media gateway controllers, media gateway, SIP-phones, SIP-proxies and so on (SIP = Session Initiation Protocol) capable to handle packet based voice and data transportation. From end-user's point of view the various scenarios will apply such environment. Some end-uses will use their analogue telephone sets for digital ISDN appliance (ISDN = Integrated Service Digital Network). Such end-users can be connected by means of legacy PSTN network, by residential gateway, access gateways or integrated access devices to the next generation network. Some end-user will use or buy new equipment like SIP-phones, SIP-clients and so on. Such equipment can be connected by means of a broadband access CPE (CPE = Customer Premise Equipment) like HFC, DSL or W-LAN (HFC = Hyper Fibre Coax; DSL = Digital Subscriber Line; W-LAN = Wireless LAN). Media gateways are responsible in such environment for interconnecting circuit switched networks with packet based networks and for the switching and routing of media streams through the communication network. These media gateways thereby support stream-like communication as voice, fax or video communication between two or more terminals linked to the communication network.

Further, Ethernet based environments are known. Within such environments, each medium access control board has a unique address which identifies without any ambiguity the destination of a given Ethernet frame. The creation of such Ethernet medium access control address is specified within the Ethernet standard 2 and ensures such unambiguous assignment of MAC addresses (MAC = Medium Access Control).

For example, a standard Ethernet 6 byte MAC address is formed by a 3 byte organisationally unique identifier (OUI) which is assigned by IEEE (= Institute of Electrical and Electronics Engineers), and a 3 byte identifier administered by the assignee.

US 2002/0154646 A1 describes a programmable services node (PSN) system for providing call services to subscribers. The PSN system may be a media gateway providing connectivity to voice and data networks whereby the PSN system can include the functionality of a distributed switch fabric architecture. Voice/data traffic received from external networks flows between communications resource modules and digital signal processing resource modules, e.g., I/O cards, over a meshed network. The I/O cards are controlled by an access processing module. In an active/passive configuration, a single access processing module manages all I/O cards while a second access processing module serves as a warm standby, ready to run the I/O cards in the event of a failure on the active system.

In US-A-5 774 640, a fault tolerant network interface for connecting a computer to a network is achieved by providing primary and alternate network connecting devices such as dual network controllers, dual transceivers, dual cables and dual connectors. A primary Ethernet controller is assigned a first MAC address while an alternate Ethernet controller is provided with a second MAC address. Because the alternate Ethernet controller acts substantially as a standby replacement for the primary Ethernet controller, this second MAC address need not be provided to other network users. On detecting a fault of sufficient severity in the primary Ethernet controller, the Ethernet controller is disabled and taken out of service by a logical device driver. At this point, the logical device driver causes the alternate Ethernet controller to assume the MAC address, and the data traffic load, of the primary Ethernet controller.

EP 0 621 713 A2 describes a MAC driver to provide a communication channel between a remote computer and a LAN, e.g., an Ethernet, over a switched network such as a PSTN. The MAC driver has a first mode in which a connection is established between the computer and the LAN over the switched network, and a second mode in which a LAN protocol is passed between the fcomputer and the LAN. The system is adapted to support a plurality of MAC types. A protocol manager matches and glues appropriate MACs and protocol drivers together in a process called "Binding".

US 2002/095493 addresses a communications network which comprises a processor for sampling queue state information from selected intermediate nodes in the network and processing the queue state information to produce a traffic intensity map. The traffic intensity map serves as a basis for dynamic data routing strategies or determining the optimal locations at which cached replicated data may be located to avoid congested regions of a computer network in order to improve the QoS of the network (QoS = Quality of Service).

It is the object of the present invention to provide an improved switching concept for a media gateway of a next generation network.

This object of the present invention is achieved by a media gateway for a next generation network comprising a redundant packet switching fabric, which can be physically distributed over multiple boards, a set of source boards and a set of destination boards, wherein the set of source boards and the set of destination boards of the media gateway are connected via "Ethernet trunks", whereas an "Ethernet trunk" denotes an infrastructure path, which may carry multiple media streams, and wherein the media gateway further comprises a control unit for detecting failures of packet switching fabric elements and/or failures of source and/or destination boards of the set of source and destination boards, determining the faulty packet switching plane and/or the medium access control address of a faulty destination board, and reassigning the Ethernet trunks to the spare packet switching plane or the concerned medium access address to a spare destination board. The object of the present invention is further achieved by a method of providing a reconfiguration of a packet switching fabric and/or a destination board of a media gateway, wherein a set of packet switching fabric elements of the media gateway and a set of destination boards of the media gateway are connected via Ethernet trunks, the method comprising the steps of: detecting a failure of a packet switching fabric element and switching the Ethernet trunks to a spare packet switching board and/or detecting a failure of a destination board of the media gateway, determining the Ethernet medium access control address of the faulty destination board and reassigning the determined Ethernet medium access address to a spare destination board.

The invention provides a fast and efficient reconfiguration of an internal packet switching fabric of a media gateway, as part of a NGN (NGN = Next Generation Network), to cope with key system requirements like high system availability ("five 9's") and hitless equipment protection switching ("stable call preservation").

According to the invention, the media gateway uses an Ethernet switch for internal packet switching having a specific internal layer 2 switching concept, which allows a powerful, efficient and flexible packet switching of media streams. Due to this concept, the invention allows a fast and reliable reconfiguration of existing internal stable voice over packet connections in case of internal card and link failures and thus achieving to preserve stable calls. Thereby, the invention combines stable call preservation and high reliability with improved media stream switching technologies.

In case of system internal failures in the data path, a non-redundant system architecture without stable call preservation would lead to overload situations within the network control plane. The number of concerned connections depends on the individual board capacity. In case of a packet interface module card failure housing a single Gigabit Ethernet interface, there are, for example, up to 8k calls impact at a voice over IP application (IP = Internet Protocol). This results in a more or less synchronised "hook-on, hook-off sequence" within the control plane leading to high overload conditions within the network control plane since multiple of regular, correlated call attempts per second values have to be expected. Thousands of real time protocol (RTP) sessions are multiplexed on one Ethernet trunk, i.e. a flow of Ethernet frames having the same MAC destination address. In case of reconfiguration due to a card failure, the invention prevents that all sources, i.e. all RTP sessions, need to update their context, i.e. destination MAC address, in order to achieve redirection to the new active destination card. Thereby, the invention prevents the aforementioned overload conditions and provides a high performance, robust and simple reconfiguration mechanism combined with powerful media stream packet switching.

Further advantages are achieved by the embodiments of the invention indicated by the dependent claims.

According to a preferred embodiment of the invention, an internal Ethernet address schema is defined and applied to the media gateway, wherein the internal Ethernet address schema uses two or more different internal MAC address types. This approach makes it possible to shape the switching and reconfiguration behaviour of the Ethernet switch to different applications and provide an easy manageable Ethernet packet switching core for the purpose of system internal redundancy and system take-over performance.

Preferably, the internal Ethernet address schema of the media gateway uses dynamic MAC address types specifying a dynamic path in terms of packet switching fabric planes and destination boards. Further, the internal address schema of the media gateway uses a static/dynamic MAC address type specifying a path that is static in terms of destination boards and dynamic in terms of packet switching fabric planes. Further, the internal address schema of the media gateway uses a static medium MAC address type specifying a path that is static in terms of packet switching fabric links and destination boards. The use of such kind of MAC address types enables an optimised mapping of applications to MAC address types and thereby gains further advantages with respect to manageability, system redundancy and system take over-performance.

According to a preferred embodiment of the invention, the media gateway assigns in an initialisation phase different Ethernet MAC address types to different applications. Preferably, it assigns a dynamic MAC address type to data path traffic, in particular RTP or VolP traffic (RTP = Real Time Protocol, VolP = Voice over IP). Further, it assigns a static/dynamic MAC address type to a system internal active or standby card to card connection. Further, it assigns a static MAC address type to system internal test traffic. Such kind of initialisation guarantees a powerful and reliable operation of the media gateway in the operation phase.

These as well as further features and advantages of the invention will be better appreciated by reading the following detailed description of presently preferred exemplary embodiments taken in conjunction with the accompanying drawings, of which:
- Fig. 1: is a block diagram of a communication system having a media gateway according to the invention.
- Fig 2.a to Fig. 2c: are functional diagrams illustrating a reconfiguration process for different MAC address types.

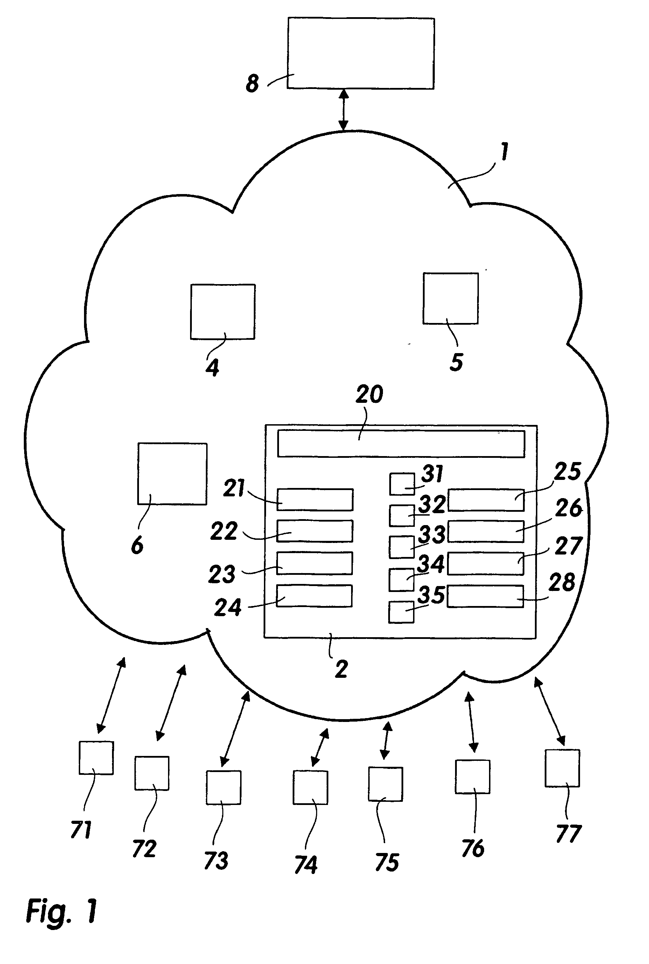

Fig. 1 shows a NGN communication system and several terminals 71 to 77 connected via this communication system.

The NGN communication system is based on a distributed IP network (IP = Internet Protocol). The architecture of this communication systems is splitted into two main sections, a control plane which is responsible for controlling the communication connections between users of the NGN communication system, and a transport plane 1, which is responsible for the transportation of the associated media streams. Exemplary, fig. 1 shows a call control server 8 which is part of the control plane of the NGN communication system. It provides a call control function for network elements of the transport plane 1 of the NGN communication system.

For example, the call control server 8 is within a NGN architecture a centralised intelligence instance for providing new VolP or multimedia services (VolP = Voice over IP). Being part of the call control server, the media gateway controller controls several media gateways via specific interface (for example H.248) for the sake of providing an access point for subscribers of telecommunication networks. Furthermore the call control server provides independent call functionalities together with switching functions for basic and supplementary services in addition with, for example, billing, routing and measurement capabilities for network apparatuses and telecommunication service providers. For example, the control server 8 provides the functionalities of a SIP-server (SIP = Session Initiation Protocol).

The transport plane 1 can be performed by various different types of physical networks, for example ATM networks or MPLS networks (ATM = Asynchronons Transfer Mode; MPLS = Multi Protocol Label Switching), which are linked via a common level 3 RT protocol layer. Further, the transport plane 1 may comprise one or several telephone networks, for example PSTN or ISDN networks (PSTN = Public Switched Telecommunication Network; ISDN = Integrated Services Digital Network). Further, the transport plane 1 may contain fixed and mobile telecommunication networks, for example GSM, UMTS or CTMA 2000 cellular networks (GSM = Global System for Mobile Communication; UMTS = Universal Mobile Telecommunication System).

The transport plane 1 of the NGN communication system contains various media gateways which provide in such IP-based environment, interconnection to circuit switched networks as well as switching and routing functionalities for stream-like communications as voice, fax or video communications between two or more of the terminals connected with the transport plane 1. Exemplary, fig. 1 shows four such media gateways 2, 4, 5 and 6 which provide seamless working of stream-like communications between the terminals 71 to 77. Further, these media gateways may provide seamless working of voice and fax connections between public switched telephone networks and IP-based networks.

The terminals 71 to 77 are IP telephone terminals or classical telephone terminals as PSTN-terminals, ISDN-terminals or mobile phones according to the GSM or UMTS standard. IP telephone terminals are, for example, IP phones or computers executing an IP phone client. For example, such terminals are SIP-phones or computers executing a SIP client. Such terminals can be connected with one of the media gateways 2, 4, 5 and 6 through residential gateways, integrated access devices (IAD) or embedded media termination devices (eMD).

In the following, the media gateways 2, 4, 5 and 6 are exemplified by hand of the media gateway 2.

The media gateway 2 comprises a control unit 20, plurality of packet interface module cards, internal media conversion modules server cards and circuit interface modules 21 to 28 and a plurality of packet switching fabric planes 31 to 35.

The packet interface module cards (part of 21 to 28) interfaces media streams handled by the media gateway 2. For example, each of the packet interface module handles up to 8k real time protocol sessions (RTP = Real Time Protocol).

The packet interface module cards as well as internal media conversion modules server cards 21 to 28 are connected with one another through the packet switching fabric planes 31 to 35. A plurality of Ethernet trunks are defined between the packet interface / media conversion module cards 21 to 28. Each Ethernet trunk represents a flow of Ethernet frames having the same MAC destination address. The packet switching fabric planes 31 to 35 provide switching functionalities for the Ethernet frames of the Ethernet trunks defined between the packet interface / media conversion module cards 21 to 28. Preferably, each of the packet interface / media conversion module cards 21 to 28 is connected by at least one physical link with each of the packet switching fabric planes 31 to 35. The packet switching fabric planes 31 to 35 switch the received Ethernet frames to respective output ports assigned to the Ethernet trunk the received Ethernet frame is assigned to. Further, it is possible that two or more of the packet interface / media conversion module cards 21 to 28 are physically connected with one or more of the packet switching fabrics 31 to 32 via a shared medium.

According to the embodiment of fig. 1, the packet interface / media conversion module cards 21 to 24 play the role of source boards which are sources of Ethernet frames switched by the packet switching fabric planes 31 to 35 and one or more of the packet interface / media conversion modules 25 to 28 play the role of destination boards which are destinations of Ethernet frames switched by the packet switching fabric planes 31 to 35. Further, it is also possible that one or more of the packet interface / media conversion module cards 21 to 28 play the role of source boards and the role of destination boards, e.g. when serving a bi-directional real-time connection.

A packet interface module which plays the role of a source board serves, for example, 8k incoming media streams each assigned to a real time protocol session. It assigns the incoming media streams to Ethernet trunks connecting the source board with dedicated destination boards. It multiplexes up to thousands of such media streams, i.e. thousand of real-time protocol sessions, on each of these Ethernet trunks. Then, the source board executes a switching process and forwards the outgoing Ethernet frames according to their MAC destination address to one of the outgoing physical links which connect the source board with the packet switching fabric planes 31 to 35. Then, the packet switching fabric plane executes a switching process and forwards the outgoing Ethernet frames according to their MAC destination address to one of the outgoing physical links which connect the packet switching fabric plane with the destination board.

The destination board demultiplexes the media streams received via the Ethernet trunks terminated by the destination board. Then, it handles the further transmission of these media streams via one of the output ports of the destination board.

The control unit 20 administrates and controls the Ethernet switching process.

In an initialisation phase, it defines and establishes the Ethernet trunks between source and destination addresses and creates the corresponding address tables for the packet switching fabric planes 31 to 35 and the source boards which perform the above mentioned Ethernet switching process.

In this initialisation phase, the control unit 20 applies an internal Ethernet address schema on the packet interface / media conversion module cards 21 to 28. This internal address schema uses two or more different internal MAC address types. For example, it uses the following three different kinds of Ethernet MAC address types within this address schema:

First, it uses a dynamic MAC address type specifying a dynamic path in terms of packet switching fabric plane and destination board. Such address type is applied to Ethernet trunks used for traffic applications, in particular Ethernet trunks transporting media streams of real-time protocol sessions.

Second, it uses a static/dynamic MAC address type specifying a path that is static in terms of destination board and dynamic in terms of packet switching fabric plane. For example, it assigns such static/dynamic MAC address type to Ethernet trunks representing internal active or stand-by card to card connections, which are for example used for the context synchronisation of packet interface / media conversion module cards.

Third, it uses a static MAC address type specifying a path that is static in term of packet switching plane and link and destination board. For example, it assigns such static MAC address type to system internal test traffic.

In the initialisation phase, the control unit 20 defines a network of Ethernet trunks having different types of destination MAC address types. These MAC address types are adapted to the respective function of the Ethernet trunk in the context of the media gateway 2.

In the operation phase, the control unit 20 monitors the packet interface / media conversion module cards 21 to 28 and the packet switching fabric planes 31 to 35 to detect failures of the packet switching fabric planes 31 to 35 and the packet interface / media conversion module cards 21 to 28. If it detects such failures, it determines the Ethernet trunks affected by the faulty packet interface / media conversion module cards or the faulty packet switching fabric plane. Then, it checks the type of the destination MAC address assigned to the affected Ethernet trunks.

If this MAC address is of the dynamic MAC address type and the Ethernet trunk is affected by a faulty destination board, it reallocates the determined Ethernet MAC address to a spare packet interface / media conversion module card, for example to a packet interface module card having enough capacity to overextend the load of the faulty packet interface module card. In case the Ethernet trunk is affected by a faulty packet switching fabric plane, it reconfigures the Ethernet trunk and reconfigures the route of this Ethernet trunk via a spare packet switching fabric plane, e.g. a packet switching fabric plane having enough capacity to over extend the load of this Ethernet trunk.

If the determined Ethernet MAC address is of the static/dynamic address type and the Ethernet trunk is affected by a faulty packet switching fabric, it reconfigures the route of this Ethernet trunk and guides the Ethernet trunk via a spare packet switching fabric to the destination board. If the Ethernet trunk is affected by a faulty destination board, it does not perform a reallocation of the MAC address nor perfoms a reconfiguration of the route assigned to the Ethernet trunk.

If the determined Ethernet MAC address if of the static MAC address type, it performs no reallocation of the Ethernet MAC address.

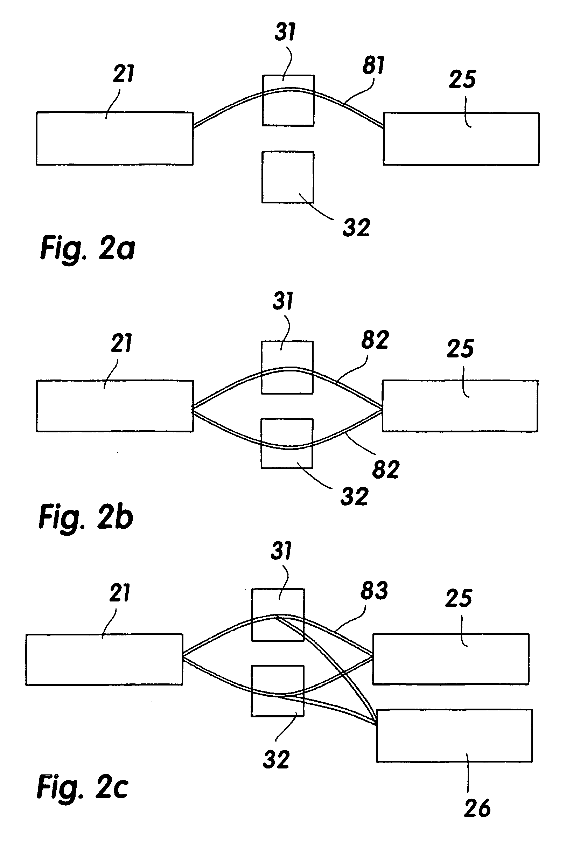

In the following, the processing of the three different Ethernet MAC address types is exemplified by hand of the figures Fig. 2a to Fig. 2c.

Fig. 2a shows a scenario with an Ethernet trunk 81 defined between a source board, namely the packet interface module card 21, and a destination board, namely the packet interface module card 25 via the packet switching fabric plane 31. The Ethernet trunk 81 has a destination MAC address of the static MAC address type. Due to the assigned MAC address type, the Ethernet trunk 81 is treated as path that is independent on state of the packet switching fabric 31 and independent on the state of the destination board. This Ethernet trunk is not subject of reconfiguration in any case of any system internal status change. In case of destination board failure or packet switching fabric plane failure, no changes in configuration are executed.

Fig. 2b shows an Ethernet trunk 82 defined between a source board, namely the packet interface module card 21, and a destination board, namely the packet interface module card 25. The Ethernet trunk 82 has a destination MAC address which is of the static/dynamic MAC address type.

The Ethernet trunk 82 is static in terms of destination board, i.e. not subject of configuration in case of destination card failure. But, the Ethernet trunk 82 is a dynamic path in terms of packet switching fabric plane failure, i.e. subject of reconfiguration in case of packet switching fabric plane failure. In case of a failure of the packet switching fabric plane 31, the control unit 20 performs changes in the address tables of the source board, namely the packet interface module card 21, that causes the source board to switch packets assigned to the Ethernet trunk 82 to the packet switching fabric plane 32. This causes the change of the Ethernet trunk route shown in Fig. 2b. This change in Ethernet trunk route is transparent for the upper protocol layers and it is therefore not necessary for these layers to reroute media streams to spare Ethernet trunks.

Fig. 2c shows the packet interface module cards 21, 25 and 26, the packet switching fabric planes 31 and 32 and an Ethernet trunk 83. The destination MAC address of the Ethernet trunk 83 is of the dynamic MAC address type. The Ethernet trunk 83 is a dynamic path in terms of packet switching fabric plane and destination board, i.e. subject of reconfiguration in case of packet switching fabric plane failure and destination board failure.

In normal operation mode, the Ethernet trunk 83 connects the packet interface module cards 21 and 25 via the packet switching fabric plane 31.

In case of failure of the packet switching fabric plane 31, the control unit 20 performs a reconfiguration of the Ethernet trunk route, e.g. the Ethernet trunk 83 is routed via the packet switching fabric plane 32. To implement this reconfiguration, the control unit 20 performs changes in the address table of the source packet interface module card 21 which causes a switching of Ethernet frames having the destination MAC address of the Ethernet trunk 83 to the packet switching fabric plane 32.

In case of failure of the packet interface module card 25, the control unit 20 performs changes in the address tables of all packet switching fabrics planes, which causes a switching of the Ethernet frames having the MAC destination address of the Ethernet trunk 83 to the packet interface module card 26.

Even in this case, the reconfiguration of the Ethernet trunk 83 is transparent for the upper protocol layers and it is therefore not necessary to assign real time protocol sessions to other Ethernet trunks.

## Claims

1. A method of providing a reconfiguration of a packet switching fabric plane (31 to 35) and/or source boards (21 to 24) of a media gateway (2, 4, 5, 6), wherein a set of source boards (21 to 24) and a set of destination boards (25 to 28) of the media gateway are connected via Ethernet trunks through a set of packet switching fabric planes (31 to 35) of the media gateway,
**characterized in**
**that** the method comprises the steps of:
detecting a failure of a packet switching fabric plane (31 to 35) and/or a destination board (25 to 28) of the media gateway (2);
determining the Ethernet medium access control address of the concerned or faulty destination board (25); and
reassigning the affected Ethernet trunks to a spare packet switching fabric plane (32) and/or the determined Ethernet medium access control address to a spare destination board (26).

2. The method of claim 1,
**characterized in**
**that** the method comprises the further step of applying an internal Ethernet address schema to the media gateway (2), the internal address schema using two or more different internal medium access control address types.

3. The method of claim 2,
**characterized in**
**that** the method comprises the further steps of
applying an internal Ethernet address schema to the media gateway (2), the internal address schema using a dynamic medium access control address type specifying a dynamic path in terms of packet switching fabric planes and destination boards,
in case of failure of a packet switching fabric plane (31 to 35), performing changes in an address table of one of the source boards (21 to 24) which cause a switching of Ethernet frames having the destination MAC address of the Ethernet trunk to the spare packet switching fabric plane (32), and
in case of failure of the destination board (25), performing changes in address tables of all packet switching fabric planes which cause a switching of Ethernet frames having the destination MAC address of the Ethernet trunk to the spare destination board (26).

4. The method of claim 2 or claim 3,
**characterized in**
**that** the method comprises the further steps of
applying an internal Ethernet address schema to the media gateway (2), the internal address schema using a static/dynamic medium access control address type specifying a path that is static in terms of destination boards and dynamic in terms of packet switching fabric planes,
in case of failure of a packet switching fabric plane (31), performing changes in an address table of one of the source boards (21 to 24) which cause the source board to switch packets assigned to the Ethernet trunk to the spare packet switching fabric plane (32).

5. The method of any of claims 2 to 4,
**characterized in**
**that** the method comprises the further steps of
applying an internal Ethernet address schema to the media gateway (2), the internal address schema using a static medium access control address type specifying a path that is static in terms of packet switching fabric planes and destination boards,
treating the Ethernet trunk as path that is independent of the state of the packet switching fabric plane and independent of the state of the destination board.

6. The method of claim 1,
**characterized in**
**that** the method comprises the further step of assigning, in an initialisation phase, different Ethernet medium access control address types to different applications.

7. The method of claim 6,
**characterized in**
**that** the method comprises the further step of assigning a dynamic medium access control address type to data path traffic.

8. The method of claim 6,
**characterized in**
**that** the method comprises the further step of assigning a static/dynamic medium access control address type to system internal active or standby card to card connections.

9. The method of claim 6,
**characterized in**
**that** the method comprises the further step of assigning a static medium access control address type to system internal test traffic.

10. A media gateway (2, 4, 5, 6) for a packet-switched communication network (1) the media gateway (2, 4, 5, 6) comprising a set of packet switching fabric planes (31 to 35), a set of source boards (21 to 24) and a set of destination boards (25 to 28), wherein the set of source boards (21 to 24) and the set of destination boards (25 to 28) of the media gateway are connected via Ethernet trunks through the set of packet switching fabric planes (31 to 35), and wherein the media gateway (2) further comprises a control unit (20)
**characterized in**
**that** the control unit (20) is adapted to detect failures of packet switching fabric planes (31 to 35) of the set of packet switching fabric planes and/or failures of destination boards (25 to 28) of the set of destination boards, determine the medium access control address of a concerned or faulty destination board (25), and reassign the affected Ethernet trunks to a spare packet switching fabric plane (32) and/or the determined medium access control address to a spare destination board (26).

## Patentansprüche

1. Verfahren zur Schaffung einer Rekonfiguration einer Packet-Switching-Netzebene (31 bis 35) und/oder Quellenkarten (21 bis 24) eines Media-Gateways (2, 4, 5, 6), wobei eine Gruppe von Quellenkarten (21 bis 24) und eine Gruppe von Zielkarten (25 bis 28) des Media-Gateways über Ethernet-Trunks durch eine Gruppe von Packet-Switching-Netzebenen (31 bis 35) des Media-Gateways verbunden sind,
**dadurch gekennzeichnet,**
**dass** das Verfahren die folgenden Schritte umfasst:
Erkennen eines Ausfalls einer Packet-Switching-Netzebene (31 bis 35) und/oder einer Zielkarte (25 bis 28) des Media-Gateways (2);
Ermitteln der Ethernet Medium Access Control Adresse der betreffenden bzw. fehlerhaften Zielkarte (25); und
neue Zuweisung der betroffenen Ethernet-Trunks zu einer Ersatz-Packet-Switching-Ebene (32) und/oder der ermittelten Ethernet Medium Access Control Adresse zu einer Ersatz-Zielkarte (26).

2. Verfahren nach Anspruch 1,
**dadurch gekennzeichnet, dass**
das Verfahren des Weiteren den Schritt zum Anwenden des internen Ethernet Adressschemas zum Media-Gateway (2) umfasst, wobei das interne Adressschema zwei oder mehr verschiedene interne Medium Access Control Adresstypen verwendet.

3. Verfahren nach Anspruch 2,
**dadurch gekennzeichnet, dass**
das Verfahren des Weiteren die Schritte umfasst zum Anwenden eines internen Ethernet Adressschemas mit einem dynamischen Medium Access Control Adresstyp mit Angabe eines dynamischen Pfads hinsichtlich der Packet-Switching-Netzebenen und Zielkarten,
bei einem Ausfall der Packet-Switching-Netzebene (31 bis 35) Durchführen von Änderungen an eine Adresstabelle einer der Quellenkarten (21 bis 24), was bewirkt, dass die Ethernet-Frames mit der MAC-Zieladresse des Ethernet-Trunks an die Ersatz-Packet-Switching-Ebene (32) vermittelt werden, und
bei einem Ausfall der Zielkarte (25) Durchführen von Änderungen an den Adresstabellen aller Packet-Switching-Netzebenen, was bewirkt, dass die Ethernet-Frames mit der MAC-Zieladresse des Ethernet-Trunks an die Packet Interface Modulkarte (26) vermittelt werden.

4. Verfahren nach Anspruch 2 oder 3,
**dadurch gekennzeichnet, dass**
das Verfahren des Weiteren die Schritte umfasst zum Anwenden eines internen Ethernet Adressschemas auf den Media-Gateway (2), wobei das interne Adressschema einen statisch/dynamischen Medium Access Control Adresstyp verwendet mit Angabe eines Pfads, der statisch ist hinsichtlich der Zielkarten und dynamisch hinsichtlich der Packet-Switching-Netzebenen,
bei einem Ausfall der Packet-Switching-Netzebene (31) Durchführen von Änderungen an der Adresstabelle einer der Quellenkarten (21 bis 24), was bewirkt, dass die Quellenkarte die dem Ethernet-Trunk zugeordneten Pakete an die Ersatz-Packet-Switching-Ebene (32) vermittelt werden.

5. Verfahren nach einem der Ansprüche 2 bis 4,
**dadurch gekennzeichnet, dass**
das Verfahren des Weiteren die Schritte umfasst zum Anwenden eines internen Ethernet Adressschemas auf den Media-Gateway (2), wobei das interne Adressschema einen statischen Medium Access Control Adresstyp verwendet mit Angabe eines Pfads, der statisch ist hinsichtlich der Packet-Switching-Netzebenen und der Zielkarten,
wobei der Ethernet-Trunk als ein Pfad behandelt wird, der vom Status der Packet-Switching-Netzebene und vom Status der Zielkarte unabhängig ist.

6. Verfahren nach Anspruch 1,
**dadurch gekennzeichnet, dass**
das Verfahren in einer Initialisierungsphase des Weiteren den Schritt umfasst zum Zuordnen verschiedener Ethernet Medium Access Control Adresstypen zu verschiedenen Anwendungen.

7. Verfahren nach Anspruch 6,
**dadurch gekennzeichnet, dass**
das Verfahren des Weiteren den Schritt umfasst zum Zuordnen eines dynamischen Medium Access Control Adresstyps zum Datenpfad-Datenverkehr.

8. Verfahren nach Anspruch 6,
**dadurch gekennzeichnet, dass**
das Verfahren des Weiteren den Schritt umfasst zum Zuordnen eines statisch/dynamischen Medium Access Control Adresstyps zu systeminternen aktiven oder Bereitschaftsverbindungen von Karte zu Karte.

9. Verfahren nach Anspruch 6,
**dadurch gekennzeichnet, dass**
das Verfahren des Weiteren den Schritt umfasst zum Zuordnen eines statischen Medium Access Control Adresstyps zum systeminternen Test-Datenverkehr.

10. Media-Gateway (2, 4, 5, 6) für ein Packet-Switching-Kommunikationsnetzwerk (1), wobei der Media-Gateway (2, 4, 5, 6) eine Gruppe von Packet-Switching-Netzebenen (31 bis 35), eine Gruppe von Quellenkarten (21 bis 24) und eine Gruppe von Zielkarten (25 bis 28) umfasst, wobei die Gruppe der Quellenkarten (21 bis 24) und die Gruppe von Zielkarten (25 bis 28) des Media-Gateways über Ethernet-Trunks durch die Gruppe von Packet-Switching-Netzebenen (31 bis 35) des Media-Gateways verbunden sind und wobei der Media-Gateway (2) des weiteren eine Steuereinheit (20) umfasst, **dadurch gekennzeichnet, dass**
die Steuereinheit (20) so angepasst ist, dass sie Ausfälle der Packet-Switching-Netzebenen (31 bis 35) in der Gruppe der Packet-Switching-Netzebenen und/oder Ausfälle der Zielkarten (25 bis 28) in der Gruppe der Zielkarten erkennt, die Medium Access Control Adresse einer betroffenen oder fehlerhaften Zielkarte (25) ermittelt und die betroffenen Ethernet-Trunks einer Ersatz-Packet-Switching-Ebene (32) und/oder der ermittelten Medium Access Control Adresse einer Ersatz-Zielkarte (26) zuordnet.

## Revendications

1. Procédé de fourniture d'une reconfiguration d'un plan de structure à commutation de paquets (31 à 35) et/ou de cartes sources (21 à 24) d'une passerelle de média (2, 4, 5, 6), dans lequel un ensemble de cartes sources (21 à 24) et un ensemble de cartes de destination (25 à 28) de la passerelle de média sont connectés par l'intermédiaire de jonction Ethernet grâce à un ensemble de plans de structure à commutation de paquets (31 à 35) de la passerelle de média,
**caractérisé en ce que**
le procédé comprend les étapes de :
détection d'une défaillance d'un plan de structure à commutation de paquets (31 à 35) et/ou d'une carte de destination (25 à 28) de la passerelle de média (2) ;
détermination de l'adresse de commande d'accès du média Ethernet de la carte de destination concernée ou défaillante (25) ; et
réattribution des jonctions Ethernet touchées à un plan de structure à commutation de paquets de réserve (32) et/ou l'adresse de commande d'accès du média Ethernet déterminée à une carte de destination de réserve (26).

2. Procédé selon la revendication 1,
**caractérisé en ce que**
le procédé comprend l'étape supplémentaire d'application d'un schéma d'adresse Ethernet interne à la passerelle de média (2), le schéma d'adresse interne utilisant deux ou plusieurs types d'adresses de commande d'accès de média internes différents.

3. Procédé selon la revendication 2,
**caractérisé en ce que**
le procédé comprend les étapes supplémentaires
d'application d'un schéma d'adresse Ethernet interne sur la passerelle de média (2), le schéma d'adresse interne utilisant un type d'adresse de commande d'accès du média dynamique spécifiant un trajet dynamique en fonction des plans de structure à commutation de paquets et des cartes de destination,
en cas de défaillance d'un plan de structure à commutation de paquets (31 à 35), réalisation de changements dans une table d'adresse d'une des cartes sources (21 à 24) qui provoquent une commutation de trames Ethernet ayant l'adresse MAC de destination de la jonction Ethernet sur le plan de structure à commutation de paquets de réserve (32), et
en cas de défaillance de la carte de destination (25), réalisation de changements dans des tables d'adresse de tous les plans de structure à commutation de paquets qui provoquent une commutation de trames Ethernet ayant l'adresse MAC de destination de la jonction Ethernet sur la carte de destination de réserve (26).

4. Procédé selon la revendication 2 ou la revendication 3,
**caractérisé en ce que**
le procédé comprend les étapes supplémentaires
d'application d'un schéma d'adresse Ethernet interne sur la passerelle de média (2), le schéma d'adresse interne utilisant un type d'adresse de commande d'accès du média statique/dynamique spécifiant trajet qui est statique en fonction des cartes de destination et dynamique en fonction des plans de structure à commutation de paquets,
en cas de défaillance d'un plan de structure à commutation de paquets (31), réalisation de changements dans une table d'adresse d'une des cartes sources (21 à 24) qui amènent la carte source à commuter des paquets attribués à la jonction Ethernet sur le plan de structure à commutation de paquets de réserve (32).

5. Procédé selon l'une quelconque des revendications 2 à 4,
**caractérisé en ce que**
le procédé comprend les étapes supplémentaires
d'application d'un schéma d'adresse Ethernet interne sur la passerelle de média (2), le schéma d'adresse interne utilisant un type d'adresse de commande d'accès du média statique spécifiant un trajet qui est statique en fonction des plans de structure à commutation de paquets et des cartes de destination,
de traitement de la jonction Ethernet en tant que trajet qui est indépendant de l'état du plan de structure à commutation de paquets et indépendant de l'état de la carte de destination.

6. Procédé selon la revendication 1,
**caractérisé en ce que**
le procédé comprend l'étape supplémentaire d'attribution, dans une phase d'initialisation, de types d'adresse de commande d'accès du média Ethernet différents à des applications différentes.

7. Procédé selon la revendication 6,
**caractérisé en ce que**
le procédé comprend l'étape supplémentaire d'attribution d'un type d'adresse de commande d'accès du média dynamique à un trafic de trajet de données.

8. Procédé selon la revendication 6,
**caractérisé en ce que**
le procédé comprend l'étape supplémentaire d'attribution d'un type d'adresse de commande d'accès du média statique/dynamique à des connexions internes carte à carte actives ou en attente de système.

9. Procédé selon la revendication 6,
**caractérisé en ce que**
le procédé comprend l'étape supplémentaire d'attribution d'un type d'adresse de commande d'accès du média statique à un trafic de test interne de système.

10. Passerelle de média (2, 4, 5, 6) pour un réseau de communications à commutation de paquets (1), la passerelle de média (2, 4, 5, 6) comprenant un ensemble de plans de structure à commutation de paquets (31 à 35), un ensemble de cartes sources (21 à 24) et un ensemble de cartes de destination (25 à 28), dans lequel l'ensemble des cartes sources (21 à 24) et l'ensemble des cartes de destination (25 à 28) de la passerelle de média sont connectés par l'intermédiaire de jonctions Ethernet grâces à l'ensemble de plans de structure à commutation de paquets (31 à 35), et dans lequel la passerelle de média (2) comprend en outre une unité de commande (20),
**caractérisée en ce que**
l'unité de commande (20) est apte à détecter des défaillances de plans de structure à commutation de paquets (31 à 35) de l'ensemble des plans de structure à commutation de paquets et/ou des défaillances de cartes de destination (25 à 28) de l'ensemble des cartes de destination, déterminer l'adresse de commande d'accès du média d'une carte de destination concernée ou défaillante (25), et attribuer de nouveau les jonctions Ethernet touchées à un plan de structure à commutation de paquets de réserve (32) et/ou l'adresse de commande d'accès du média déterminé à une carte de destination de réserve (26).
